# EUROPEAN PATENT SPECIFICATION

(11) **EP 0 687 044 B1**
(45) Date of publication and mention of the grant of the patent: **01.04.1998**
(21) Application number: 95108874.9
(22) Date of filing: 08.06.1995
(51) Int. Cl.: H01S 3/03, H01S 3/0975

(54) **Rectangular discharge gas laser**
Gaslaser mit rechteckigem Entladungsraum
Laser à gaz à décharge rectangulaire

(30) Priority: 08.06.1994 US 255463
(43) Date of publication of application: 13.12.1995
(73) Proprietor: QSource, Inc., East Hartford, Connecticut 06108 (US)
(72) Inventor: Chenausky, Peter, Avon, Connecticut 06001 (US)
(74) Representative: Sparing - Röhl - Henseler Patentanwälte

(56) References cited:
- US-A- 4 088 965
- APPLIED PHYSICS LETTERS, vol.59, no.26, 23 December 1991, NEW YORK US pages 3363 - 3365 J.G.XIN ET AL. 'RF-EXCITED ALL-METAL WAVEGUIDE CO2 LASER'
- OPTICS COMMUNICATIONS, vol.89, no.5/6, 15 May 1992, AMSTERDAM NL pages 423 - 428 C.J.SHACKLETON ET AL. 'LATERAL AND TRANSVERSE MODE PROPERTIES OF CO2 SLAB WAVEGUIDE LASERS'

## Description

### 1. Field of the Invention

The present invention relates to the generation of coherent light and particularly to increasing the volumetric efficiency of transversely excited gas lasers. More specifically, this invention is directed to a novel and improved transversely RF excited gas laser having a rectangular discharge and especially to such a device wherein the electrodes do not function to guide the intracavity optical radiation. Accordingly, the general objects of the present invention are to provide novel and improved methods and apparatus of such character.

### 2. Description of the Prior Art

While not limited thereto in its utility, the present invention is particularly well suited for application to sealed-off CO₂ lasers. Sealed-off CO₂ lasers have utility in a broad range of medical and industrial applications where lightweight materials are processed. A long-standing common desire in these diverse fields of use is to reduce both the size per watt and cost per watt of laser power. This common desire to achieve compactness, reasonable manufacturing cost and relatively high discharge efficiency has driven the evolution of CO₂ laser technology. Thus, CO₂ lasers have evolved from low pressure dc excited devices, wherein the discharge was caused to occur in a glass tube, to higher pressure transverse RF excited waveguide or non-waveguide devices. The most recent innovation in transversely RF excited devices are "slab" lasers, i.e., devices having a discharge cavity which comprises an optical waveguide in one dimension defined between a pair of closely spaced electrodes.

CO₂ lasers using longitudinal dc excitation in glass tubes, while cost effective, cannot be optically folded economically and thus such devices could not achieve the desired objectives of having a low manufacturing cost and being compact. Accordingly, because transverse RF excited devices are easily folded optically to obtain increasingly higher output powers in compact packages, RF pumped devices have essentially replaced glass tube devices for many commercial applications. The slab-type transversely RF excited devices, which achieve high output powers using a two mirror optical cavity, thus have an advantage over conventional transversely RF excited devices which require a folded optical resonator. The elimination of the intravacuum/intracavity optical stations results in a significant cost reduction and thus the devices with "slab" discharges are a logical replacement for the earlier devised conventional transverse RF pumped lasers.

To briefly describe the the prior art dc glass tube laser technology, a high voltage electrode was located midway along an evacuated, nominal 4 to 10 mm diameter, glass plasma tube. Electrically grounded, or nearly grounded, electrodes were typically located near either end of the tube. The tube was filled with a CO₂-N₂-He gas laser mixture, and upon application of the excitation voltage, a CO₂ gain medium was generated in the plasma. Laser action was achieved by placing a pair of mutually aligned mirrors at opposite ends of the plasma discharge tube. In such devices the excitation is called longitudinal because it is along the axis of the optical resonator defined between the pair of mutually aligned mirrors. Other factors being equal, the output power of such a CO₂ laser device is a function of the length of the discharge, i.e., high laser output power and long length are synonymous. As noted above, since glass tubes optically "fold" very poorly, "high" optical output power could be achieved only at the expense of making ever longer glass tubes and hence the utility of these devices suffered because of their long length.

Transverse RF excitation, i.e., excitation of a normally square optical waveguide cross-section discharge region located between a pair of closely spaced extended electrodes is shown in U.S. Patent 4,169,251. In lasers of the type depicted in this patent, the excitation is transverse to the optical resonator. Transverse RF excitation has generated high laser output powers per unit of discharge length from relatively compact, sealed-off devices. Also, because of the relatively low magnitude of the RF voltage that is required to establish a gas discharge across the small transverse dimension of the discharge chamber, the vacuum envelopes of such lasers can be fabricated from metal. For reasons associated with vacuum integrity and low device weight, the vacuum envelope of such lasers is usually made of aluminum. Thus, such transverse RF excited lasers are mechanically and thermally robust when compared to longitudinally dc excited glass tube lasers.

Referring to Patent 4,363,126, a transversely excited RF laser is depicted wherein a pair of extended metal electrodes are separated by a pair of ceramic spacers. When the electrodes and spacers are placed in a vacuum envelope, which is backfilled with an appropriate mixture of CO₂-N₂-He, and an RF source is connected to the "upper" electrode, a discharge which is transverse to the axis of the optical cavity can be produced in the space between the "upper" RF electrode and the grounded opposed electrode. In use of the device of Patent 4,363,126, if the gas discharge region is in the range of from 1 to 3 mm square, the RF pump frequency for the highest laser output power must be in the range of 70 to 200 MHz, with the smaller discharge dimensions favoring the use of 150 to 200 MHz excitation.

For CO₂ laser light, a round or square discharge with a crossection dimension in the 1 to 3 mm range forms a hollow bore optical waveguide, and thus the optical resonator for such a device functions in accordance with optical waveguide theory. Larger discharge dimensions, i.e., in the 4 to 10 mm range, can also be transversely RF excited; however, as the transverse discharge dimension is increased, the discharge pressure must be reduced to maintain discharge stability. For these larger transverse discharge dimensions, the optical resonator may be chosen to be either free space stable or unstable depending on the Fresnel number of the optical cavity. One advantage of RF excited CO₂ lasers using larger transverse dimensions is that efficient discharge excitation can be obtained with a lower frequency RF source, specifically a frequency that coincides with one of the internationally recognized ISM (Industrial, Scientific or Medical) frequencies at 40.68, 27.12 or 13.56 MHz. These frequencies are harmonically related so as to reduce the possibility of incidental RF leakage from the apparatus causing interference harmful to lawful communications. Thus in addition to being exempt from some low level of incidental radiation, because lower frequency RF sources cost less to manufacture, these laser devices have a cost advantage as well.

Referring to the prior art as exemplified by Patent 4,169,251, impedance matching between the RF source and the gas discharge becomes difficult as the length, and therefore the capacitance, of the discharge structure is increased. This problem, inherent in the device of Patent 4,169,251, was overcome by resonating the capacitance of the discharge structure with a shunt inductor as exemplified by the teachings of Patent 4,363,126. The use of a tuned RF circuit rendered the capacitance of the discharge structure basically non-relevant and permitted the output power of small, short RF pumped CO₂ lasers to be increased.

Attempts to increase the obtainable output power by increasing the gain length of the laser precipitated the problem of a longitudinal voltage variation along the discharge structure due to an RF standing wave effect. This longitudinal voltage variation along the length of the ungrounded electrode resulted from the combined effect of the high relative dielectric constant of the ceramic spacers and the high frequency of the RF excitation source. The solution to the problem of longitudinal voltage variation, as may be seen from Patent 4,443,877, is to place a number of shunt inductors along the discharge structure. This "distributed resonance" concept permitted a very substantial increase in the output power obtainable from metal body CO₂ lasers and thus resulted in very compact and energetic, albeit expensive, CO₂ laser packages. An example of such a compact laser embodying the distributed resonance concept may be seen from Patent 4,787,090.

In addition to the above briefly described use of parallel and distributed parallel resonance circuits for generating a transverse RF discharge between a pair of exposed extended electrodes, it is also possible to employ a single compound RF circuit to transform the discharge impedance to the source impedance. The latter technique is disclosed in Patent 4,751,717. Energization of an RF laser via a single compound impedance matching circuit has the advantage of confining the fields produced by the transformer so as to minimize circuit losses and also permits overall laser size to be reduced. The technique of Patent 4,751,717 also allows RF sources up to the microwave region to be systematically employed for excitation purposes. If the microwave frequency is chosen to be that commonly used by microwave ovens, the combination of a metal bodied CO₂ laser energized by a microwave oven oscillator magnetron can potentially result in a very cost effective laser device because, while high frequency RF sources using amplifiers are generally quite costly, such oven magnetron oscillators are comparatively simple single tube electrode devices that are produced in such large volume they are not costly.

Patent 4,751,717 further teaches that the discharge region between the opposed electrodes of a transversely excited RF laser may be non-symmetric, i.e., the patent describes laser discharge structures having horizontal and vertical Fresnel numbers which encompass all combinations of freespace-waveguide, freespace-unstable and waveguide-unstable optical cavities.

Compact, sealed-off CO₂ lasers with output powers up to the level of one kilowatt have been achieved through application of transverse RF excitation to a CO₂ laser discharge that is confined between a pair of closely-spaced, large area electrodes, i.e., a "slab" discharge. Examples of so-called "slab" lasers may be seen from Patents 4,719,639, 4,939,738 and 5,123,028. In a "slab" CO₂ discharge device, the large area exposed metal electrodes, which are typically spaced apart by only 1 to 2 mm, function to confine the laser discharge to the region between the electrodes and promote heat transfer from the laser medium to the conductively cooled electrodes. The closely spaced electrodes also function in one dimension as an optical waveguide for the intracavity resonator mode. In practice, the large area discharge geometries have been either annular discharge regions, generated between concentric cylinders, or planar discharge regions, generated between a pair of highly polished, flat, metallic electrodes. As between the annular and plane-plane CO₂ laser geometries, the plane-plane geometry has been demonstrated to be the most successful.

The output power obtainable from "slab" lasers of the type depicted in the above-referenced patents has been shown to drop dramatically as the distance between the electrodes, i.e., the waveguide spacing, increases. Thus, as reported in the text "Lateral and Transverse Mode Properties of CO₂ Slab Waveguide Lasers", C.J. Shackleton et al, Opt. Comm. 89 (1992), pp. 423-428, using a 125 MHz frequency RF excitation source, an output of 210 watts at an efficiency of 11% was achieved with a 1 mm waveguide height having a 1.8 cm wide discharge region that was 39 cm in length. However, when the electrode spacing was in the 3 mm range, the output power decreased by a factor of 2 when compared to a 1 to 1.5 mm waveguide dimension.

To summarize, those skilled in the art have accepted the premise that a slab laser should have a electrode spacing which is much smaller than the dimension of the discharge chamber measured in the transverse direction. This very small electrode spacing, in turn, dictates use of very high discharge excitation frequencies if discharge instabilities are to be avoided and if extraction of high power with high discharge efficiency is to be achieved. This accepted operational constraint is well known to those skilled in the art of square or round RF pumped waveguide CO₂ lasers with closely spaced electrodes. High frequency excitation is necessary because the plasma sheaths which are always formed on, or closely adjacent to, electrode surfaces contract as the excitation frequency for a fixed electrode spacing is increased. If lower frequency discharge excitation is attempted with a constant electrode spacing, the sheath regions grow until they are a substantial fraction of the inter-electrode spacing. The plasma sheaths that form adjacent to the electrodes then necessarily become a larger function of the discharge "length" in the direction of the RF field as the frequency of excitation is lowered. When this happens, the combined influence of discharge pressure and mix, electron transit time and electrode spacing prevent the deposition of high discharge input powers while still maintaining a stable alpha type of RF discharge. Since the plasma sheath region is known to be the place where deleterious plasma reactions cause disassociation of the CO₂ lasing species, increasing the fraction of discharge volume that the sheaths occupy can be expected to have a deleterious effect on sealed-off laser operational life.

It is to be noted that it has been suggested that a discharge driven gold catalyst material may be employed to increase laser output and improve laser service life. Such a catalyst is disclosed in Patent 4,756,000. To avoid sputtering of this catalytic material at the electrode surfaces, however, such catalytic material is best applied only to the ceramic spacers which define the side walls of the discharge cavity and, as discussed above, the use of ceramic materials for this purpose is minimized in prior art rectangular lasers because of the large area of the closely spaced electrodes.

The slab laser of Patent 4,939,738 is characterized by a positive branch unstable resonator in the wide discharge dimension and a waveguide resonator in the narrow dimension. The device depicted in this patent, outside the cavity, converts the rectangular beam to a square beam through the use of a lens.

Previously proposed "slab" discharge geometries are, for the reasons discussed above, characterized by an electrode spacing ranging between 0.7 to 2.25 mm, an electrode width in the range of 1.35 cm to 4.5 cm, and electrode lengths that range from 30 to 77 cm. Thus, a common characteristic of prior slab lasers is that the electrode widths are much greater than the electrode spacing with the waveguide mode being supported in the small discharge dimension which extends between the two closely spaced electrodes.

As mentioned above, in order to achieve the output power required for many medical and light industrial applications, while at the same time having an acceptable level of laser discharge efficiency, presently available slab CO₂ lasers employ a high excitation frequency, i.e., a frequency which is typically in the 100-200 MHz range. Since high frequency RF sources are more costly than lower frequency sources, these lasers have a significant cost disadvantage. Furthermore, the use of such a high excitation frequency complicates the intravacuum construction of the laser since these high discharge capacitance devices typically require between 10 and 20 intravacuum RF circuit inductors across the discharge chamber to negate the standing wave induced voltage variation along the discharge electrode structure as taught by prior art in Patents 4,352,188, 4,443,877 and 4,751,717. Without these inductive elements, the requisite uniform voltage distribution along the length of the discharge cavity can not be maintained due to the standing wave effects of the RF excitation, and low laser output power and low laser discharge efficiency will result. While it may be desirable from a manufacturing standpoint to have these inductive elements outside of the laser vacuum envelope, the generation of an efficient high power CO₂ laser output requires that these elements be placed electrically as close to the electrode structure as possible. Such placement increases the cost of the device.

It must be noted that operation of a slab laser at a pumping frequency other than one of the ISM frequencies at 13.56, 27.12 or 40.68 MHz raises the issue of unlawful interference with emergency, aircraft communication or public broadcast services if such devices have any incidental RF leakage. These FCC licensed services are located throughout the entire RF spectrum from 40 to 200 MHz. Accordingly, presently proposed slab lasers, for commercial applicability, will require expensive and complicated RF shielding.

As a further disadvantage of prior art rectangular discharge lasers, the electrodes must be formed to be exactingly flat for waveguiding purposes. This prevents the co-application of DC power and RF excitation to augment laser output, as taught in Patent 5,097,472, since it is well known in the art that flat surfaces are undesirable for generating or maintaining uniform dc discharge electric fields.

It must also be observed that, since the large area electrodes of previously proposed slab lasers serve to waveguide the intracavity mode in the dimension normal to the electrodes, the ungrounded electrode itself cannot be easily segmented without introducing optical waveguide loss into the cavity resonator. Thus, as higher laser output powers are sought by increasing the electrode area and increasing the discharge input power, the single electrode discharge input impedance will fall according to Ohm's law to a level where impedance matching between the commonly employed 50 ohm high power RF source and the laser itself becomes more and more difficult. This problem becomes much more acute in the frequency range above 50 MHz where efficient, compact, lumped element high transformation ratio matching circuits are difficult to fabricate.

### Summary of the Invention

The present invention overcomes the above described and other deficiencies and disadvantages of the prior art and, in so doing, provides a novel and improved transverse RF pumped gas laser characterized by low weight, few intravacuum parts, low fabrication cost, relatively high discharge and volumetric efficiency, use of a low discharge excitation frequency and potential use of effective extravacuum cooling. In accordance with the invention, a large area discharge, which is generally rectangular in all plane views, may be generated using an ISM excitation frequency, and particularly the 27.12 MHz ISM frequency. In cross section, this discharge geometry has a longer and a shorter dimension, the longer dimension being between the electrodes and the shorter dimension, suitable for guiding intracavity laser light, being provided by ceramic side walls. A laser in accordance with the present invention consists of a first, i.e., an ungrounded "upper" RF electrode and an oppositely disposed "lower" grounded electrode. These electrodes are separated by a pair of spatially displaced, non-conductive spacers which, in the preferred embodiment, are comprised of a ceramic. Also in the preferred embodiment, the spacers are elongated and overlie the electrodes. This geometry results in two long and slender electrodes which form opposite walls of the discharge chamber. The upper electrode is isolated from ground potential by a third non-conductive spacer. These five components, i.e., the two electrodes and three spacers, are situated inside a metal vacuum envelope. For sealed-off devices, to gain a significant advantage of area cooling of the discharge, the discharge chamber must depart significantly from a symmetric crossection, i.e., the distance between the electrodes must be larger than the separation between the two ceramic spacers which cooperate with said electrodes to define the cross-section of the discharge chamber. Also, to promote single transverse mode operation of the cavity resonator, the dimension of the discharge chamber defined between the electrodes must be at least 4 mm for 10P20 CO₂ laser light or have a Fresnel number larger than unity.

When RF power is applied to the ungrounded upper electrode, a transverse RF discharge is established between the electrodes and confined to the region between the ceramic spacers. The electrodes have no function related to the guiding of the intracavity optical radiation generated by this discharge and specifically may be non-planar whereby the discharge chamber will have a curve across its width and along its length to promote a uniform discharge.

In a laser in accordance with the invention, the confined discharge is established between a pair of widely spaced electrodes but is stabilized by collisions with nearby non-conductive walls. Thus, in contradistinction to previous devices where the discharge is collisionally cooled by closely spaced electrodes on whose surfaces plasma sheaths are always observed, in the present invention the cooling effect provided by the electrodes is minimized and the cooling function is provided by walls on which plasma sheaths do not form. Additionally, the present invention provides a discharge geometry wherein stable alpha type RF discharges can be generated in an operating regime where the product of discharge pressure and electrode spacing is high.

The present invention also provides a gas laser discharge geometry that can generate high output powers per unit of discharge area from a compact and uncomplicated structure using a "low" ISM RF excitation frequency without compromising laser performance and cost.

Further, in a laser in accordance with the invention, the geometry of the discharge inherently reduces standing wave effects along the electrode structure and thus reduces the number of inductive elements required to overcome the effects of a standing wave voltage variation. Specifically, using 27.12 MHz excitation, a 35 cm length of CO₂ gain medium requires only a single extravacuum inductor in a RF circuit to transform the discharge impedance to a source impedance of 50 Ohms. This same discharge geometry also has a low discharge capacitance.

Since the electrodes of a laser in accordance with the invention are not required for waveguiding, these electrodes do not have to be cartesian planar. In fact, the present invention encompasses discharge geometries that can accommodate electrodes with non-cartesian planar shapes to promote discharge stability at high peak power pulsed and cw RF/dc inputs.

As a further advantage of not employing the electrodes for waveguiding, the discharge geometry of the present invention permits the length of the electrodes to be independent of the length of the structure that either confines the discharge or guides the resonator mode. Accordingly, a wide range of optical cavities can be adapted to a laser in accordance with the present invention.

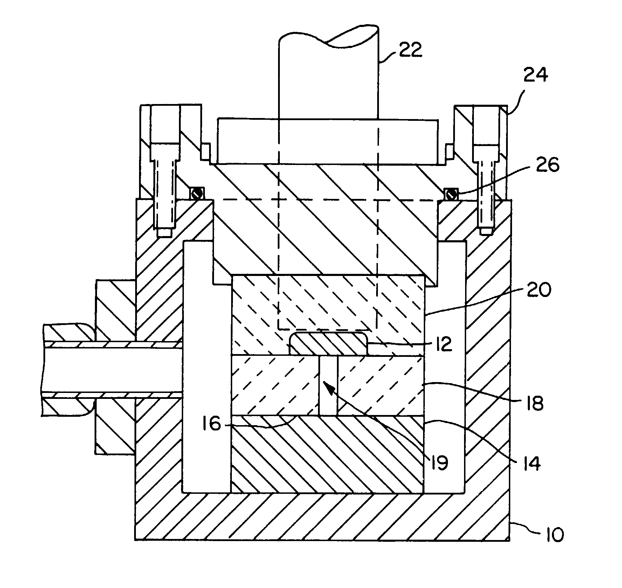

### Brief Description of the Drawing

The present invention may be better understood, and its numerous objects and advantages will become apparent to those skilled in the art, by reference to the accompanying drawing which is a schematic, cross sectional, side elevation view of a rectangular discharge laser in accordance with the invention.

### Description of the Disclosed Embodiment

Referring now to the drawing, the discharge geometry of a laser in accordance with the present invention is defined by five individual ceramic and metal components which are located within a vacuum envelope 10. In one reduction to practice of the invention, vacuum envelope 10 was comprised of aluminum with 3/8" thick walls. The components located within envelope 10 include an ungrounded, upper RF electrode 12. Upper electrode 12 is spaced from a grounded, lower electrode 14 by left and right ceramic spacer pieces 16 and 18. In the disclosed embodiment, the ceramic spacers 16 and 18 were comprised of Al₂O₃. The spacers at least in part overlap the electrodes and cooperate with the electrodes to define an elongated chamber 19 which, in the disclosed embodiment, is of rectangular shape. Because of the overlap of the ceramic spacers, the oppositely disposed sides of the cavity, which are comprised of conductive material, are elongated and narrow. Viewed along the optical axis of the laser, this spaced narrow electrode arrangement confines the laser medium to a vertically oriented generally rectangular region, i.e., the distance between the electrodes measured across the cavity in a first direction is greater than the width of the cavity. Restated, the spacing between the ceramic spacers 16 and 18, measured in a second direction which is transverse to the first direction is smaller than the average electrode spacing. In order to permit use of the widest range of optical resonators, the electrode spacing should correspond to a Fresnel number of one or higher.

The upper electrode 12 is received in an elongated cavity provided therefor in a first surface of a third ceramic spacer 20. Radio frequency power, desirably at an ISM frequency, is delivered to electrode 12 via a conductor 22 which extends through an aperture in envelope 10 and a corresponding hole in the ceramic spacer 20. Impedance matching is preferably accomplished in the manner disclosed in the above referenced Patent 4,751,717 using a single inductor, not shown, deployed outside the vacuum envelope 10. The application of RF energy to ungrounded electrode 12 will energize the gas in the rectangular discharge chamber defined by electrodes 12 and 14 and spacers 16 and 18. The separation between spacers 16 and 18 serves to confine the CO₂ laser discharge and may also guide the intracavity optical mode in the short horizontal dimension if a one dimensional waveguide laser is desired.

In a preferred embodiment of the invention, the overall length of each of the ceramic spacers 16 and 18 was 37.7 cm while the length of the upper electrode 12 was 35 cm. Also, in a preferred embodiment, the energization frequency was 27.12 MHz. Contrary to prior art slab lasers, the electrodes 12 and 14 of a laser in accordance with the present invention need not be highly polished. While the electrodes 10 and 12 are shown as being cartesian planar, they may be formed from half round cylindrical shapes or other more complicated shapes that are known to those skilled in the art as uniform field electrodes.

All of the five intravacuum components shown in the drawing can be held under compression via a removable cover piece 24 as shown or, alternatively, by a metal wedge arrangement built into the lower grounded electrode 14. The cover 24 to vacuum chamber 10 is sealed to the chamber by means of a suitable seal, for example a Viton O-ring 26, as shown. A similar sealing arrangement is provided for the end plates, not shown, that hold the cavity mirrors which are disposed adjacent the opposite ends of the rectangular discharge cavity.

The apparatus shown in the drawing will function as a transversely RF excited, rectangular discharge, gas laser. This large area discharge laser may be distinguished from prior art large electrode area CO₂ laser devices by virtue of the fact that the discharge is generated by a pair of spaced apart electrodes that are long and slender and have no function related to the guiding of the intracavity optical radiation. As a consequence, the material from which the electrodes are made, its surface preparation or its transverse shape can be arranged to promote a uniform electric field with high peak pulsed power inputs. Also in contradiction to the prior art, the spacing between the electrodes is much greater than the width of the discharge between the electrodes. Restated, the large area discharge created in operation of a laser in accordance with the present invention has a longer and a shorter side, the longer side being between the electrodes and having a Fresnel number of at least unity. For 10P20 CO₂ laser light, a 35 cm long discharge length would have an electrode spacing of at least 3.85 mm. To gain the advantage of area discharge cooling, the shorter dimension of the discharge chamber of such a CO₂ laser, defined by the distance 19 between the ceramic spacers 16 and 18 would be less than 3 mm, and preferably in the range of 1 to 2 mm, in order to serve a waveguiding function in this shorter dimension.

In the preferred embodiment, for a given desired cavity length and design, the width of the discharge medium can be controlled by adjusting the spacing between the ceramic spacers 16 and 18. Before a final width of the discharge is chosen, minor adjustments in the discharge dimension can be made without a change being made in the width of the upper electrode itself simply by changing the separation between the spacers 16 and 18. The height of the spacers 16 and 18 may be used to set the Fresnel number of the cavity in the vertical dimension in conjunction with the shapes of the upper and lower electrodes 12 and 14.

If a waveguide optical cavity design in the dimension of the width of the discharge is desired, and again presuming the lasing species to be CO₂, the separation between spacers 16 and 18 should preferably be in the range of 1 to 3 mm. As is well known to those skilled in the art of CO₂ waveguide lasers, if a one dimensional guided wave resonator structure is desired, the ceramic surfaces adjacent to the discharge must be ground flat with a diamond loaded grinding wheel to tolerances that are appreciated and well known to those so skilled. The separation between the ends of the ceramic spacers 16 and 18 and the cavity end mirrors will likewise be set for the type of one dimensional waveguide resonator desired according to theory and practice well known to those skilled in the art of CO₂ lasers.

In a pair of reductions to practice of the invention, a common electrode spacing of 12.7 mm was used with discharge widths respectively of 3.2 mm and 4 mm. The length of the left and right ceramic spacers was held fixed at 37.7 cm and the cavity end mirrors were each located an additional 1.5 cm outwardly from the ends of the ceramic spacers. Accordingly, the discharge cavity had a 40.7 cm overall length. In the case of the 3.2 mm discharge width, the horizontal Fresnel number Nₕ of the cavity was 0.59 while the vertical Fresnel number Nᵥ of the cavity was 9.3. The cavity resonator was bounded on a first end by a 95% reflecting ZnSe mirror having a 2 meter concave spherical surface with an AR coated rear surface for 10P20 CO₂ laser light. The opposite end of the cavity resonator was defined by a maximum reflectivity silicon mirror with a 4 meter spherical concave surface. Accordingly, the stable optical resonator g values corresponding to the cavity mirrors were 0.8 and 0.9 respectively.

Tests on the above-described reductions to practice demonstrated that with a gas mixture of He-N₂-CO₂, in a 6-1-1 ratio with 5% Xenon added, and with an energization frequency of 27.12 MHz, the pressure for maximum output power increased from 37.5 Torr when using a 4 mm discharge width, to 50 Torr when using the 3.2 mm discharge width. The tests were performed employing a variable output power RF source with the output of the source being gated into nominal 1.1 msec discharge pulses at a PRF of 500 Hz. Only one inductor located outside the vacuum envelope was used in the RF transformer to match the 50 ohm solid state RF source to the laser discharge impedance.

In the above-discussed tests, higher output power was observed with the 3.2 mm separation of spacers 16 and 18. This result may be attributed to the fact that the narrower discharge could be operated at a somewhat higher pressure with a higher average input power. However, the overall efficiency of the laser with a 3.2 mm discharge width was lower than that with the 4 mm discharge width because of the optical loss associated with poorer matching of the wavefront curvature of the intracavity radiation to the cavity mirrors.

It should be noted that the wider separation between the ceramic spacers does not provide the discharge with wall cooling that is as effective as with the narrower discharge. Thus, even though the cavity losses are less with the wider discharge and the laser efficiency is somewhat greater, the maximum input power that can be tolerated is lower and therefore the maximum output power is also lower.

In summary, the level of discharge efficiency of a "slice" laser in accordance with the invention is at least as good as can be achieved with prior art "slab" devices and this comparable efficiency is obtainable employing a relatively low frequency of discharge excitation and with a much less complicated, and thus less costly, device.

The obtainable output power from a laser in accordance with the invention can be increased by decreasing the distance between the ceramic spacers 16 and 18 to thereby provide a narrower discharge width, by using a laser pressure medium in the range of 60 to 80 Torr, by using a discharge driven gold catalyst on the ceramic walls adjacent to the discharge and by increasing the discharge input power.

While a preferred embodiment has been shown and described, various modifications and substitutions may be made thereto without departing from the scope of the invention as defined by the Claims. Accordingly, it is to be understood that the present invention has been described by way of illustration and not limitation.

## Claims

1. A transversely excited rectangular discharge gas laser comprising:
first and second elongated electrodes (12, 14);
a pair of nonconductive spacers (16, 18) extending between said electrodes, said electrodes and spacers cooperating to define a gaseous discharge region (19) therebetween, said discharge region having a cross-section having an average longer dimension and an average shorter dimension which is transverse to said longer dimension, the longer dimension being between the said electrodes and the shorter dimension being between the said spacers and being suitable for guiding laser light;
a laser gas being disposed in said discharge region; and
means (22) for applying RF power between said electrodes to excite the said gas whereby a plasma is created in said discharge region.

2. The laser of claim 1 wherein said long dimension has a Fresnel number of at least unity.

3. The laser according to either of claims 1 or 2 wherein said long dimension is at least 1.5 x said short dimension.

4. The laser according to any of claims 1 to 3 wherein said short dimension is in the range of 0.25-4 mm.

5. The laser according to any of claims 1 to 4 further comprising means defining a vacuum envelope (10), said electrodes and said spacers being disposed in said envelope defining means.

6. The laser according to any of claims 1 to 5 further comprising a mirror disposed adjacent each end of said discharge region, said mirrors defining an optical axis for the laser.

7. The laser according to any of claims 1 to 6 wherein said gas includes C0₂ as the lasing species.

8. The laser according to any of claims 1 to 7 wherein said spacers at least in part overlap said electrodes whereby said shorter dimension may be selected by relative movement of said spacers in the direction of said shorter dimension.

9. The laser according to any of claims 1 to 8 wherein the surfaces of the spacers which define walls of the discharge chamber (19) are selected to be parallel whereby said walls function to guide intracavity laser light.

10. A method of generating coherent light comprising the steps of:
confining a laser gas mixture in a generally rectangularly shaped chamber (19), the chamber having a longitudinal axis extending between a pair of facing end mirrors, the chamber being bounded on a first pair of opposite sides which extend between the ends by long and slender electrodes (12, 14), the chamber being bounded on a second pair of opposite sides by ceramic spacers (16, 18) which extend between said electrodes, the distance between said spacers being suitable for guiding laser light and being shorter than the distance between said electrodes; and
applying radio frequency power between the electrodes to transversely excite the gas.

11. The method of claim 10 wherein the average spacing between the electrodes is selected to be at least 1.5 times the width of the electrodes defined by the distance between said spacers.

12. The method of claim 10 or 11 wherein the surface of the spacers which define walls of the chamber (19) are selected to be parallel whereby said walls function to guide intracavity laser light.

13. The method according to any of the claims 10 to 12 wherein the step of confining the gas includes selecting the average spacing between the electrodes to obtain a Fresnel number of greater than unity.

## Patentansprüche

1. Transversal angeregter Gaslaser mit rechteckiger Entladung, umfassend:
eine erste und eine zweite längliche Elektrode (12, 14);
ein Paar nichtleitender, sich zwischen den Elektroden erstrekkender Abstandshalter (16,18), wobei die Elektroden und die Abstandshalter zusammenarbeiten zur Bildung eines dazwischenliegenden Gasentladungsbereiches (19), dieser Gasentladungsbereich einen Querschnitt besitzt mit einer durchschnittlich längeren Abmessung und einer durchschnittlich kürzeren Abmessung, die quer zur längeren Abmessung verläuft, die längere Abmessung zwischen den Elektroden und die kürzere Abmessung zwischen den Abstandshaltern verlaufen und geeignet sind zum Leiten von Laserlicht;
ein in dem Entladungsbereich vorgesehenes Lasergas; und
Mittel (22) zum Anlegen von Hf-Leistung zwischen den Elektroden zum Anregen des Gases, wodurch ein Plasma in dem Entladungsbereich erzeugt wird.

2. Laser nach Anspruch 1, wobei die lange Abmessung eine Fresnel-Zahl von mindestens eins besitzt.

3. Laser nach Anspruch 1 oder 2, wobei die lange Abmessung mindestens das 1,5-Fache der kurzen Abmessung beträgt.

4. Laser nach einem der Ansprüche 1 bis 3, wobei die kurze Abmessung in dem Bereich von 0,25-4mm liegt.

5. Laser nach einem der Ansprüche 1 bis 4, weiterhin umfassend:
Mittel zur Bildung einer Vakuumhülle (10), wobei die Elektroden und Abstandshalter in dem die Hülle bildenden Mittel angeordnet sind.

6. Laser nach einem der Ansprüche 1 bis 5, weiterhin umfassend:
einen Spiegel, der benachbart zu jedem Ende des Entladungsbereiches angeordnet ist, und die Spiegel eine optische Achse für den Laser bilden.

7. Laser nach einem der Ansprüche 1 bis 6, wobei das Gas CO₂ als lasernde Sorte enthält.

8. Laser nach einem der Ansprüche 1 bis 7, wobei die Abstandshalter zumindest teilweise die Elektroden überlappen, wobei die kürzere Abmessung gewählt werden kann durch relative Bewegung der Abstandshalter in Richtung der kürzeren Abmessung.

9. Laser nach einem der Ansprüche 1 bis 8, wobei die Oberflächen der Abstandshalter, die Wände der Entladungskammer (19) bilden, parallel gewählt sind, wodurch diese Wände zum Leiten von Laserlicht innerhalb des Aufnahmeraumes dienen.

10. Verfahren zum Erzeugen von kohärentem Licht, umfassend die Schritte:
Beschränken einer Lasergasmischung auf eine im allgemeinen rechteckförmige Kammer (19), wobei die Kammer eine Längsachse besitzt, die sich zwischen einem Paar einander endseitig gegenüberstehenden Spiegeln erstreckt, die Kammer begrenzt wird durch ein erstes Paar gegenüberliegender Seiten, die sich erstrecken zwischen den Enden von langen und schlanken Elektroden (12, 14), die Kammer begrenzt wird durch ein zweites Paar gegenüberliegender Seiten von keramischen Abstandshaltern (16, 18), die zwischen den Elektroden sich erstrecken, der Abstand zwischen den Abstandshaltern geeignet ist für das Leiten von Laserlicht und kürzer ist als der Abstand zwischen den Elektroden; und
Anwenden von Hf-Leistung zwischen den Elektroden zum transversalen Anregen des Gases.

11. Verfahren nach Anspruch 10, wobei der durchschnittliche Abstand zwischen den Elektroden derart gewählt ist, daß er mindestens das 1,5-Fache der Breite der Elektroden beträgt, definiert durch den Abstand zwischen den Abstandshaltern.

12. Verfahren nach Anspruch 10 oder 11, wobei die Oberfläche der Abstandshalter, die Wände der Kammer (19) bilden, parallel gewählt werden, wodurch die Wände zum Leiten von Laserlicht innerhalb des Aufnahmeraumes dienen.

13. Verfahren nach einem der Ansprüche 10 bis 12, wobei der Schritt des Bregrenzens des Gases das Auswählen des durchschnittlichen Abstandes zwischen den Elektroden zum Erhalt einer Fresnal-Zahl größer als eins umfaßt.

## Revendications

1. Laser à gaz à excitation transversale à décharge rectangulaire comprenant :
des premières et secondes électrodes allongées (12, 14) ;
une paire d'espaceurs (16, 18) non conducteurs s'étendant entre lesdites électrodes, lesdites électrodes et espaceurs coopérant de manière à définir entre eux une région de décharge gazeuse (19), ladite région de décharge ayant une section transversale présentant une plus grande dimension moyenne et une plus petite dimension moyenne transversale à ladite plus grande dimension, la dimension la plus grande se trouvant entre lesdites électrodes et la dimension la plus petite se trouvant entre lesdits espaceurs et étant appropriée au guidage de la lumière laser ;
un gaz laser étant placé dans ladite région de décharge ; et
des moyens (22) pour appliquer une énergie radiofréquence entre lesdites électrodes pour exciter ledit gaz en sorte qu'un plasma soit créee dans ladite région de décharge.

2. Laser selon la revendication 1 dans lequel ladite grande dimension a un nombre de Fresnel au moins égal à l'unité.

3. Laser selon l'une des revendications 1 ou 2, dans lequel ladite grande dimension est au moins 1,5 fois ladite petite dimension.

4. Laser selon l'une quelconque des revendications 1 à 3 dans lequel ladite petite dimension est dans la plage 0,25 - 4 mm.

5. Laser selon l'une quelconque des revendications 1 à 4, comprenant en outre des moyens définissant une enceinte à vide (10), lesdites électrodes et lesdits espaceurs étant disposés dans lesdits moyens définissant l'enceinte.

6. Laser selon l'une quelconque des revendications 1 à 5 comprenant en outre un miroir disposé de façon adjacente à chaque extrémité de ladite région de décharge, lesdits miroirs définissant un axe optique pour le laser.

7. Laser selon l'une quelconque des revendications 1 à 6, dans lequel ledit gaz inclut le CO₂ en tant que milieu actif à effet laser.

8. Laser selon l'une quelconque des revendications 1 à 7 dans lequel lesdits espaceurs recouvrent au moins partiellement lesdites électrodes en sorte que ladite dimension la plus petite puisse être choisie à l'aide d'un déplacement relatif desdits espaceurs dans la direction de ladite dimension la plus petite.

9. Laser selon l'une quelconque des revendications 1 à 8 dans lequel les surfaces des espaceurs qui définissent les parois de la chambre de décharge (19) sont choisies de façon à être parallèles, en sorte que lesdites parois fonctionnent de manière à guider la lumière laser à l'intérieur de la cavité.

10. Procédé de génération d'une lumière cohérente comprenant les étapes consistant à :
confiner un mélange de gaz laser dans une chambre (19) de forme générale rectangulaire, cette chambre ayant un axe longitudinal s'étendant entre une paire de miroirs d'extrémité se faisant face, la chambre étant délimitée sur une première paire de côtés opposés qui s'étendent entre les extrémités par des électrodes (12, 14) longues et minces, la chambre étant délimitée sur une seconde paire de côtés opposés par des espaceurs en céramique (16, 18) qui s'étendent entre lesdites électrodes, la distance entre lesdits espaceurs étant appropriée au guidage de la lumière laser et étant inférieure à la distance entre lesdites électrodes ; et
appliquer une énergie radio fréquence entre les électrodes pour exciter le gaz transversalement.

11. Procédé selon la revendication 10, dans lequel l'espacement moyen entre les électrodes est choisi pour être au moins 1,5 fois la largeur des électrodes définie par la distance entre lesdits espaceurs.

12. Procédé selon la revendications 10 ou 11 dans lequel les surfaces des espaceurs qui définissent les parois de la chambre (19) sont choisies de manière à être parallèles en sorte que les parois fonctionnent de manière à guider la lumière laser à l'intérieur de la cavité.

13. Procédé selon l'une quelconque des revendications 10 à 12 dans lequel l'étape de confinement du gaz inclut la sélection de l'espacement moyen entre les électrodes pour obtenir un nombre de Fresnel supérieur à l'unité.
